# FASCICULE DE BREVET EUROPEEN

(11) **EP 3 247 751 B1**
(45) Date de publication et mention de la délivrance du brevet: **19.10.2022**
(21) Numéro de dépôt: 16701594.0
(22) Date de dépôt: 22.01.2016
(51) Int. Cl.: C09D 5/08

(54) **COMPOSITION ANTI-CORROSION ET PROCEDE POUR PREPARER UNE COUCHE ANTI-CORROSION SUR UNE SURFACE D'UN SUBSTRAT UTILISANT LADITE COMPOSITION**
ANTIKORROSIONSZUSAMMENSETZUNG UND VERFAHREN ZUR HERSTELLUNG
ANTICORROSION COMPOSITION AND PROCESS FOR PREPARING AN ATICORROSION LAYER ON A SURFACE OF A SUBSTRATE USING SAID COMPOSITION

(30) Priorité: 22.01.2015 FR 1550505
(43) Date de publication de la demande: 29.11.2017
(73) Titulaire: Socomore, 56000 Vannes (FR)
(72) Inventeur: CATEL, Sébastien, 56000 Vannes (FR); GENTY, Sébastien, 56000 Vannes (FR); HERVE, Grégoire, 75012 Paris (FR)
(74) Mandataire: Brevalex
(86) Numéro de dépôt international: PCT/EP2016/051350
(87) Numéro de publication internationale: WO 2016/116605

(56) Documents cités:
- WO-A1-92/01023
- WO-A1-03/102034
- WO-A1-03/102034
- US-A1- 2007 102 671
- US-A1- 2007 102 671
- US-A1- 2008 216 705
- US-A1- 2008 216 705
- US-A1- 2012 288 700
- chapter 15.7: "Uralkyds and other autoxidazable urethanes" In: Zeno W. Wicks, Jr.,Frank N. Jones,S. Peter: "Organic Coatings: Science and technology", 1 janvier 2007 (2007-01-01), ORGANIC COATINGS : SCIENCE AND TECHNOLOGY, WILEY-INTERSCIENCE, USA, PAGE(S) 320 - 322, XP009187178, ISBN: 0-471-69806-7 pages 320-322, 15.7.1
- SNIHIROVA DARYA ET AL: "SMART protective ability of water based epoxy coatings loaded with CaCO3microbeads impregnated with corrosion inhibitors applied on AA2024 substrates", ELECTROCHIMICA ACTA, vol. 83, 10 août 2012 (2012-08-10), pages 439-447, XP028945030, ISSN: 0013-4686, DOI: 10.1016/J.ELECTACTA.2012.07.102
- SNIHIROVA DARYA ET AL: ""SMART" protective ability of water based epoxy coatings loaded with CaCO3microbeads impregnated with corrosion inhibitors applied on AA2024 substrates", ELECTROCHIMICA ACTA, vol. 83, 10 August 2012 (2012-08-10), pages 439-447, XP028945030, ISSN: 0013-4686, DOI: 10.1016/J.ELECTACTA.2012.07.102
- 1 January 2007 (2007-01-01), ORGANIC COATINGS : SCIENCE AND TECHNOLOGY, WILEY-INTERSCIENCE, USA, PAGE(S) 320 - 322, XP009187178, ISBN: 978-0-471-69806-7

## Description

### DOMAINE TECHNIQUE

L'invention concerne une composition anti-corrosion pour préparer une couche ou film anti-corrosion, aussi appelé(e) couche ou film de protection contre la corrosion, sur une surface d'un substrat, en particulier sur une surface d'un substrat comprenant, un métal et/ou un alliage d'un métal, et/ou un matériau composite, de préférence sur une surface d'un substrat constitué par un métal et/ou un alliage d'un métal, et/ou un matériau composite.

De préférence, le métal est l'aluminium, l'alliage est un alliage d'aluminium et le composite est un polymère thermoplastique (un « plastique ») à renforts de fibres, telles que des fibres de carbone.

Le substrat sur lequel est préparée la couche peut être nu ou déjà revêtu notamment d'une peinture.

L'invention a également trait à un procédé pour préparer une couche ou film anti-corrosion sur une surface d'un substrat qui met en œuvre ladite composition.

Le domaine technique de l'invention peut être défini, de manière générale, comme celui du traitement de surfaces, en particulier de surfaces en métaux ou en alliages de métaux ou en matériaux composites.

Le domaine technique de l'invention peut être défini notamment comme celui du revêtement de surfaces en métaux, tels que l'aluminium, le fer, ou le titane, ou d'alliages de métaux comme l'acier ou les alliages d'aluminium , ou de matériaux composites, qui sont utilisés par exemple dans les industries aéronautique, aérospatiale, ferroviaire, et automobile, la construction navale, le transport de pétrole et de gaz, la production d'énergie éolienne ou hydrolienne, et les industries du forage et de l'exploration notamment gazière ou pétrolière, pour fabriquer par exemple des véhicules automobiles (voitures, camions, motocyclettes etc.), des bateaux, des aéronefs (avions, hélicoptères, hydravions, drones etc.), des gazoducs, oléoducs, aqueducs, et plateformes « offshore ».

Plus précisément, l'invention appartient au domaine technique des compositions utilisées pour revêtir la surface de substrats éventuellement peints et pour protéger la surface de ces substrats contre les environnements agressifs tels que les atmosphères corrosives, et les agressions chimiques et/ou mécaniques.

Ces compositions sont généralement appliquées sur des surfaces peintes pour protéger les structures sous-jacentes d'une corrosion éventuelle en cas de défauts dans les couches de peintures et même pour garantir une longue durée de vie de ces couches de peinture, autrement dit pour que ces couches de peinture soient durables et permanentes. On évite ainsi que ces couches ne soient remplacées au cours du temps de service d'un avion par exemple.

Les revêtements obtenus avec ces compositions protègent aussi la peinture des attaques extérieures, par exemple de la condensation notamment liée au nombre de passagers, des liquides toilettes des aéronefs, et des produits dégivrants ou des liquides hydrauliques.

### ÉTAT DE LA TECHNIQUE ANTÉRIEURE

Les compositions anti-corrosion connues actuellement sur le marché aéronautique sont par exemple les produits disponibles auprès de la société Chemetall^{®} sous la dénomination ARDROX^{®} comme le ARDROX^{®} AV 15, le ARDROX^{®} AV 30, ou le ARDROX^{®} AV 35D, ou le produit disponible auprès de la société SOCOMORE sous la dénomination de SOCOPAC 65 H ou le produit disponible auprès de la société Zip-Chem Products sous la dénomination Cor-Ban^{®} comme le Cor-Ban^{®} 35, le Cor-Ban^{®} 23.

Les compositions connues, sont des compositions dites compositions «1-K » ou mono-composant, qui comprennent généralement une résine liante et des agents anti-corrosion dans un solvant généralement organique.

Bien que les compositions connues permettent de préparer des revêtements qui possèdent une certaine résistance à la corrosion, il existe toujours un besoin pour une composition anti-corrosion qui permettent de préparer des revêtements présentant des propriétés anti-corrosion excellentes, et améliorées par rapport aux propriétés anti-corrosion des revêtements obtenus avec les compositions anti-corrosion connues.

Les propriétés anti-corrosion sont généralement appréciées au moyen du test de résistance à la corrosion au brouillard salin (BS).

Ainsi les compositions actuellement couramment utilisées dans le domaine de l'aéronautique comme le SOCOPAC^{®} 65 H, ou l'ARDROX^{®} AV15 lorsqu'elles sont appliquées à une épaisseur de 15 µm (épaisseur du film sec), permettent d'obtenir une résistance au brouillard salin (BS) de 1500 heures pour le SOCOPAC^{®} 65 H ou l'ARDROX AV15^{®}.

La dernière composition en date, à savoir l'ARDROX^{®} AV35D permet d'obtenir 3000 heures au BS à 35 µm sec mais il s'agit là d'un système à deux couches. De plus, ce produit se caractérise par une durée de séchage de l'ordre de 60-90 minutes, et qui dépend fortement des conditions dans lesquelles est réalisé le séchage, à savoir essentiellement la température et l'humidité. Enfin, la faible viscosité de cette composition peut entraîner des défauts du revêtement, tels que des problèmes de coulures lorsque la composition est appliquée avec des épaisseurs supérieures à 60 µm à l'état humide.

En outre, le revêtement obtenu avec cette composition présente une très faible résistance mécanique, car il est peu ou pas réticulé.

Cela pose des problèmes lorsque le personnel chargé d'appliquer cette composition doit accéder une seconde fois à la zone où la composition a été appliquée, car le revêtement est alors piétiné et colle sous les pieds.

Ce phénomène est accentué dans les ambiances humides et chaudes.

Il existe aussi un besoin pour une telle composition anti-corrosion qui tout en donnant des revêtements possédant d'excellentes propriétés anti-corrosion, avantageusement améliorées par rapport aux compositions de l'art antérieur, présente aussi d'excellentes propriétés d'adhérence sur toutes sortes de substrats, comme les alliages d'Aluminium nus et peints, les aciers, et les composites nus et peints, d'excellentes propriétés de résistance mécanique et de résistance aux agressions chimiques par exemple les solvants, fluides hydrauliques et autres fluides, tels que les fluides utilisées dans les aéronefs.

L'homme du métier cherche en effet constamment à améliorer les propriétés anti-corrosion mais aussi les propriétés mécaniques des revêtements obtenus en utilisant ces compositions anti-corrosion notamment car la composition une fois appliquée peut être foulée par les opérateurs lors des opérations de maintenance ou de fabrication.

Une telle composition doit avantageusement posséder une durée de séchage rapide pour réduire les durées des cycles de production lors de la fabrication, ou lors des opérations de maintenance (MRO) et ainsi réduire les coûts liés à ces opérations. Par exemple on cherche à avoir des temps d'immobilisation des aéronefs au sol plus courts.

Une telle composition doit, en outre, avantageusement ne contenir que peu ou pas de solvants organiques.

Le but de la présente invention est de fournir une composition anti-corrosion qui réponde entre autres aux besoins et exigences énumérés plus haut.

Le but de la présente invention est encore de fournir une composition anti-corrosion qui ne présente pas les limitations, défauts et désavantages des compositions anti-corrosion de l'art antérieur et qui apporte une solution aux problèmes des compositions anti-corrosion de l'art antérieur. US 2008216705 A1 décrit une composition de peintures anticorrosion comprenant un liant et un sel neutralisé sur un support métallique. Les résines alkydes et uralkydes sont citées. Le Zn(DMCT)2 est un composé inorganique modifié avec un composé organique ayant des fonctions thiols.

WO03102034 A1 décrit des sels inorganiques ayant des anions ou cations inorganiques en présence de résines organiques réticulables par UV.

### EXPOSÉ DE L'INVENTION

Ce but, et d'autres encore, sont atteints, conformément à l'invention, par une composition anti-corrosion comme dans la revendication 1.

Le solvant (le solvant est choisi parmi l'eau, les solvants organiques et leurs mélanges, préférentiellement l'eau) n'est qu'optionnel et n'est ajouté que s'il est nécessaire d'ajuster la viscosité.

Les composés comprenant au moins une fonction thiol et/ou au moins une fonction thione seront aussi appelés par commodité mercaptans, composés mercaptans, ou composés de la famille des mercaptans dans ce qui suit.

La composition selon l'invention est une composition dite composition ou formulation « 1-K » ou mono-composant. Autrement dit, les composants qui composent la composition selon l'invention ne sont pas stockés séparément et mélangés seulement peu de temps avant l'utilisation.

Au contraire, la composition selon l'invention une fois préparée peut être stockée pendant une longue durée, si toutefois, bien sûr elle n'est pas soumise à des conditions conduisant à son séchage.

La composition selon l'invention n'a jamais été décrite dans l'art antérieur.

En particulier, la composition selon l'invention comprend une combinaison spécifique d'agents inhibiteurs de corrosion, à savoir la combinaison d'au moins un agent inhibiteur de corrosion organique spécifique choisi parmi les composés comprenant au moins une fonction thiol et/ou au moins une fonction thione et d'au moins un agent inhibiteur de corrosion inorganique solide.

Une telle combinaison spécifique d'agents inhibiteurs de corrosion n'a jamais été décrite dans l'art antérieur lié au domaine des revêtements anticorrosion.

De manière surprenante, la composition selon l'invention permet de préparer des couches sur des substrats notamment métalliques qui tout en possédant d'excellentes propriétés anti-corrosion, améliorées par rapport aux couches obtenues avec les compositions de l'art antérieur, présentent généralement aussi d'excellentes propriétés de résistance mécanique, d'adhérence et de résistance aux agressions chimiques.

A titre d'exemple, suivant l'épaisseur de la couche anti-corrosion selon l'invention, il est possible d'obtenir des niveaux de protection au brouillard salin (BS) de quelques centaines d'heures à plusieurs milliers d'heures dans des essais réalisés selon la norme ASTM B117 ou ISO 9227:2012.

Cet excellent niveau de protection est obtenu avec un film dont l'épaisseur sèche va généralement de 5 à 50 µm.

A titre d'exemple, l'adhérence de la couche anti-corrosion selon l'invention, sur la surface par exemple en métal, en alliage ou en composite est conservée après une exposition continue à l'humidité. La couche anti-corrosion selon l'invention ne présente pas de cloques, de craquelures ou de délamination même au-delà de plusieurs centaines voire plusieurs milliers d'heures d'exposition dans une enceinte de condensation (ISO 6270-1 :1998/ASTM D4585). De même, le film ne présente aucune cloque, craquelure ou délamination après plusieurs dizaines d'heures voire centaines d'heures passées dans une enceinte climatique dont la température et l'humidité varient périodiquement, à savoir respectivement de -55°C à 80°C et de 50% HR à 100% HR.

La mise en œuvre dans les compositions de l'invention d'un agent inhibiteur de corrosion organique spécifique choisi parmi les composés comprenant au moins une fonction thiol et/ou au moins une fonction thione à la place des inhibiteurs de corrosion habituellement utilisés dans les compositions anti-corrosion conduit déjà à une amélioration des propriétés anti-corrosion et cette amélioration est encore accrue lorsque l'on associe cet agent inhibiteur de corrosion organique spécifique de la famille des mercaptans à un agent inhibiteur de corrosion inorganique solide.

Il est à noter que la composition résout le problème à la base de l'invention dès que les composants essentiels a), b), et d) dans leur définition la plus générale sont présents. Les autres composants ne sont que des composants optionnels qui peuvent cependant apporter certaines propriétés avantageuses.

De la même manière, la sélection de composants particuliers parmi les composants rentrant dans la définition des composants essentiels a), b) et d), peut permettre d'apporter également certaines propriétés avantageuses.

Avantageusement, la composition selon l'invention comprend, en % en poids par rapport au poids total de la composition :
- de 30 % à 60 % en poids de la résine liante organique ;
- de 5 % à 20 % en poids de l'agent inhibiteur de corrosion organique choisi parmi les composés comprenant au moins une fonction thiol et/ou au moins une fonction thione ;
- de 5 % à 20 % en poids de l'agent inhibiteur de corrosion inorganique solide ;
- de 0 % à 50 %, de préférence de 10 % à 40 % en poids du solvant.

Il est clair que la somme des % en poids des constituants de la composition selon l'invention est toujours de 100% en poids.

La composition selon l'invention a généralement un extrait sec de 30 % à 60 % en poids. Pour des concentrations plus élevées ou plus faibles, des problèmes d'application peuvent être éventuellement observés.

Il n'existe aucune limitation quant au choix de la résine liante de la composition selon l'invention.

Cette résine liante peut être choisie parmi les résines liantes couramment utilisées dans les compositions anti-corrosion.

Selon l'invention, la résine liante peut être choisie parmi les résines alkydes, les résines alkydes modifiées comme les résines alkydes modifiées uréthanes ou les résines alkydes modifiées époxy, les résines terpéniques, les résines acryliques comme les résines styrène-acryliques, les résines hydrocarbures, et les résines vinyliques comme les résines acryliques vinyliques et les résines styréniques vinyliques.

Avantageusement, la résine liante est choisie parmi les résines alkydes modifiées uréthane aussi appelées résines alkydes uréthanes.

Ces résines alkydes modifiées et notamment les résines alkydes modifiées uréthane ou les résine vinyliques acryliques peuvent être disponibles en milieu solvant organique (milieu solvanté) tel que le white-spirit, ou en milieu aqueux, généralement sous la forme de dispersions ou émulsions dans de l'eau.

Des exemples de telles résines sont donnés dans le Tableau I ci-dessous :

**Tableau I.**

| **Milieu** | **Type de résine** | **Nom de marque de la résine** | **Fabricant de la résine** |
|---|---|---|---|
| aqueux | Alkyde modifiée uréthane | Worleesol E 150 W | Worlée Chemie |
| aqueux | Alkyde modifiée uréthane | Worleesol E 380W | Worlée Chemie |
| aqueux | Alkyde modifiée uréthane | Worleesol E 330 W | Worlée Chemie |
| aqueux | Vinylique acrylique | Haloflex 202 ou 299 | DSM |

Les résines, et notamment les résines alkydes modifiées uréthane, en milieu aqueux, qui se présentent généralement sous la forme de dispersion ou émulsion de ces résines dans de l'eau sont encore préférées car elles donnent les couches présentant les meilleures propriétés.

En effet, il a été mis en évidence que l'un des principaux problèmes des compositions anti-corrosion connu, actuellement disponibles sur le marché, est dû aux liants, autrement dit aux résines utilisées dans ces compositions.

En effet, ces compositions de l'art antérieur contiennent toutes des résines collantes, « tackifiantes », des résines hydrocarbures, ou encore des résines terpéniques qui sont des résines employées dans le domaine des adhésifs et qui possèdent une température de transition vitreuse Tg suffisamment élevée pour conférer au produit une fois formulé un séchage physique adéquat.

Par séchage « physique », on entend un séchage sans réticulation, par simple évaporation du solvant volatil.

Cette technologie faisant appel à de telles résines avec un séchage « physique », donne des revêtements ne possédant aucun réseau dense, et donc par définition, aucune réticulation à cœur. Ces revêtements ont donc de très faibles résistances mécaniques et sont sensibles aux effets environnementaux, par exemple aux atmosphères riches en solvants, aux températures élevées, à la condensation, et aux sollicitations mécaniques.

La mise en œuvre préférentielle, selon l'invention, de résines alkydes modifiées conduit à des films réticulés à propriétés fortement renforcées.

Ces films peuvent en outre être éventuellement retirés à l'aide de solvants tels que le DIESTONE DLS^{®}, le SOCOCLEAN AQUAFORTE^{®} et autres qui sont qualifiés dans le domaine aéronautique pour ce genre d'opération.

C'est notamment le cas des films préparés à partir de compositions contenant les trois premières résines mentionnées dans le tableau I.

Les temps de séchage en milieux confinés, riches en vapeurs de solvants, obtenus avec les compositions anti-corrosion, selon l'invention, contenant des résines alkydes modifiées sont nettement inférieurs aux temps de séchage obtenus avec une composition de l'art antérieur, à savoir l'ARDROX^{®} AV 35D, comme cela ressort clairement du Tableau II ci-dessous.

**Tableau II : Séchage en surface de revêtements (épaisseur sèche de 35 µm à température ambiante dans une enceinte de dimensions 220 mm × 100 mm × 100 mm possédant une ouverture sur la partie supérieure de dimensions 40 mm × 20 mm.**

| Composition | Liant de la composition | Temps de séchage d'une couche de la composition en milieu confiné (98% HR, 50°C) |
|---|---|---|
| Selon l'invention (1) | Dispersion d'alkyde modifiée uréthane (produit aqueux) | 10-60 min |
| Selon l'art antérieur : Ardrox^{®}AV35D | Résine hydrocarbure (non réticulable) | >48 heures (toujours collante) |

On constate que dans ces conditions riches en solvants, la composition de l'art antérieur sèche très difficilement, voire jamais, du fait de la nature non liante des résines employées, tandis que le temps de séchage des compositions selon l'invention est comparativement très réduit. Les temps de séchage les plus courts sont obtenus avec la composition selon l'invention contenant une dispersion aqueuse de résine alkyde modifiée uréthane.

Un avantage supplémentaire lié à la mise en œuvre préférentielle, de résines alkydes modifiées dans les compositions selon l'invention repose sur le fait que le temps de séchage peut être modulé très facilement par l'ajustement de siccatifs éventuellement présents dans la formule, ce qui est impossible techniquement avec les compositions de l'art antérieur ne contenant pas de telles résines, du fait même de la nature chimique des résines que contiennent les compositions de l'art antérieur, à savoir des résines non-réticulables, qui sèchent « physiquement », sans réticulation.

En outre, la résistance au brouillard salin (BS) de revêtements préparés avec les compositions anti-corrosion, selon l'invention, contenant des résines alkydes modifiées est nettement meilleure que la résistance au brouillard salin de revêtements préparés avec des compositions de l'art antérieur, à savoir l'ARDROX^{®} AV 35D ou le SOCOPAC^{®} 65 H, comme cela ressort clairement du Tableau III ci-dessous.

**Tableau III : Résistance au brouillard salin selon la norme ASTM B-117/ISO 9227 : 2012 des revêtements préparés à partir de compositions selon l'invention ou selon l'art antérieur, appliquées sur des plaques d'alliage d'aluminium 2024-T3 après dégraissage, attaque sodique et désoxydation, puis séchées 7 jours à température ambiante. SB = composition solvantée ; WB= composition aqueuse.**

| Composition | Liant de la composition | Résistance au brouillard salin (épaisseur sèche 30-35 µmdft) |
|---|---|---|
| Selon l'invention (1) | Dispersion d'alkyde modifiée uréthane (WB) | 3000-4000 h |
| Haloflex 202 ou 299 | Résine vinylique-acrylique | 3000-4000 h |
| Selon l'art antérieur : SOCOPAC 65H^{®} | Résine terpénique (non réticulable) (SB) | 2000 h |
| Selon l'art antérieur : ARDROX^{®} AV35D | Résine hydrocarbure (non réticulable) (SB) | 2000-2500 h |

Des analyses de DMA ont été réalisées indiquant que la composition (1) selon l'invention sèche pour former un film libre « manipulable » possédant un niveau de réticulation non nul (identifié de par la présence d'un plateau caoutchoutique succédant à la transition Tg tan mesurée entre 51°C et 55°C).

La cohésion des films a ensuite été évaluée par un test d'abrasion par voie sèche selon la norme NF EN ISO 7784-2. Il s'avère que la couche préparée avec la composition selon l'art antérieur : ARDROX^{®} AV35D se détériore dès 20 cycles avant d'être complétement détruite après 100 cycles.

La composition (1) selon l'invention conduit à une couche possédant une résistance parfaite, à savoir 0,15% de perte de masse seulement après 500 cycles.

Ce test démontre que la composition (1) selon l'invention qui est une composition préférée comprenant une résine modifiée uréthane possède une cohésion et une réticulation à cœur capable de résister aux sollicitations mécaniques.

Ainsi, les compositions selon l'invention qui contiennent avantageusement des résines alkydes modifiées conduisent à une réduction drastique du temps de séchage dans des conditions dégradées, par exemple dans une atmosphère confinée riche en solvant, à une meilleure résistance mécanique et à des propriétés anti-corrosion supérieures aux compositions de l'art antérieur, telles que l'ARDROX^{®} AV35D.

Ainsi, l'agent inhibiteur de corrosion organique est choisi parmi le 2-Mercaptobenzothiazole ou 2-MBT, aussi appelé Benzothiazole-2-thiol ou 2(3H)-Benzothiazolethione, le 6-Méthyl-2-mercaptobenzothiazole, le Naphto[1,2-d]thiazole-2(1H)-thione, le 7-méthyl-benzothiazole-2-thiol, la 4-méthyl-2(3H)-benzothiazolethione, la 6-Ethyl-2-benzothiazolinethione, le 2,5-Dimercapto-1,3,4-thiadiazole ou DMTD, le mercaptobenzimidazole, et les sels de ceux-ci, par exemple les sels de métaux ou d'amine de ceux-ci.

De préférence, l'agent inhibiteur de corrosion organique peut être choisi parmi le sel de sodium (1/1) de la Benzothiazolethione, le sel de zinc (2 :1) de la Benzothiazolethione, et le sel de cyclohexylamine du 2-Mercaptobenzothiazole.

L'agent inhibiteur de corrosion organique préféré qui donne les meilleurs résultats en termes de propriétés anti-corrosion est le 2-MBT ou un sel de celui-ci.

La composition selon l'invention peut comprendre, en outre, au moins un accélérateur.

Avantageusement, la composition selon l'invention comprend de 2 à 20% en poids, de préférence de 5 à 10 % en poids d'accélérateur par rapport au poids total de la composition.

En d'autres termes, l'agent inhibiteur de corrosion organique choisi parmi les mercaptans peut être couplé, associé à un ou plusieurs accélérateurs, par exemple à un ou plusieurs accélérateurs de vulcanisation.

Là-encore, les combinaisons de mercaptans et d'accélérateurs peuvent être très nombreuses et très variées.

L'accélérateur peut être notamment un thiocarbamate (les thiocarbamates sont des accélérateurs de vulcanisation) comme le 1-pyrrolidine-dithiocarbamate ou PYRR.

L'association d'un mercaptan avec un accélérateur conduit à une synergie qui peut améliorer les excellents résultats en termes de résistance à la corrosion obtenus avec les mercaptans seuls.

L'inhibiteur de corrosion inorganique peut être choisi parmi les inhibiteurs de corrosion sous la forme de pigments, c'est-à-dire les pigments qui ont une action d'inhibition de la corrosion ou pigments inhibiteurs de la corrosion.

Selon l'invention, l'agent inhibiteur de corrosion inorganique est choisi parmi les oxydes de métaux tels que les oxydes de zinc, de cérium IV, de titane, de zirconium, de fer, de praséodyme (III) et d'antimoine ; les oxydes de métalloïdes ; l'orthophosphosilicate de zinc calcium strontium aluminium hydraté ou commercialement l'HEUCOPHOS ZCP^{®} ; la silice amorphe synthétique échangée par des ions calcium ; le polyphosphate de strontium aluminium hydraté ; le sulfate de baryum ; le 5-nitroisophtalate de zinc ; le phosphosilicate de calcium et de strontium rendu organophile ; le phosphate de zinc notamment rendu organophile ; le molybdate de zinc notamment rendu organophile ; le polyphosphate d'aluminium modifié ; le titanate de strontium ; l'oxyde d'antimoine et d'étain (ATO) ; le molybdène.

Des exemples d'inhibiteurs de corrosion sous la forme de pigments sont donnés dans le Tableau IV ci-dessous.

**Tableau IV.**

| Dénominations commerciales des inhibiteurs de corrosion sous la forme de pigments | Fabricant | Nom Chimique |
|---|---|---|
| SHIELDEX^{®} AC5, SHIELDEX^{®} AC3 | GRACE | silice amorphe synthétique échangée par des ions calcium |
| NOVINOX^{®} PAS | SNCZ | polyphosphate d'aluminium modifié |
| NUBIROX^{®} 106 | NUBIOLA | Phosphate de zinc et molybdate de zinc rendus organophiles |
| NUBIROX^{®} 302 | NUBIOLA | phosphosilicate et de calcium et de strontium rendue organophile |
| ZELEC^{®}1410T ZELEC^{®} 3410T | MILLIKEN | L'oxyde d'antimoine et d'étain (ATO) |
| Pr₂O₃ | SIGMA ALDRICH | Oxyde de praséodyme (III) |
| HEUCOPHOS^{®} SRPP | HEUBACH | strontium aluminium polyphosphate hydrate |
| HEUCOPHOS^{®} ZCP+ | HEUBACH | 5 zinc calcium strontium aluminium orthophosphate silicate hydrate |
| HEUCOPHOS^{®} SAPP | HEUBACH | strontium aluminium polyphosphate hydrate |
| ALBAWHITE^{®} 70 | SACHTLEBEN | Sulfate de baryum |
| SrTiO₃ | SIGMA ALDRICH | Titanate de strontium |
| Mo | SIGMA ALDRICH | Nanoparticules de Molybdène |

Selon l'invention l'agent inhibiteur de corrosion inorganique présente une taille de particules nanométrique.

Par taille de particules nanométrique, on entend que la taille moyenne, par exemple le diamètre moyen (d₅₀), des particules nanométriques est de 1 à 100 nm, de préférence de 5 à 50 nm, de préférence encore de 10 à 50 nm, mieux de 10 à 20 nm.

La taille des particules est mesurée par MET (Microscopie Electronique en Transmission).

Il s'est avéré que l'incorporation dans les compositions selon l'invention d'un agent inhibiteur de corrosion inorganique présentant une taille de particules nanométrique permettait d'améliorer grandement la résistance à la corrosion des revêtements préparés à partir des compositions selon l'invention, par exemple sur des plaques d'aluminium 2024-T3 par rapport à des compositions contenant des inhibiteurs de corrosion de taille non-nanométrique, par exemple micrométrique.

Ainsi, pour un même inhibiteur, par exemple l'oxyde de zinc, introduit dans les mêmes proportions, généralement entre 1% et 5%, le revêtement contenant le ZnO nanométrique (taille moyenne (d₅₀) des particules de 10 à 20 nm) permet de résister entre 1000 et 1400 heures à une exposition au brouillard salin (BS) avec une épaisseur de couche à l'état sec de 6 µm alors que celui contenant l'oxyde de zinc non nanométrique n'a qu'une résistance comprise entre 850 et 1000 heures dans les mêmes conditions.

Le fait d'incorporer un inhibiteur de corrosion sous forme nanométrique permet donc d'améliorer de façon significative les performances de résistance à la corrosion du revêtement.

Il semblerait qu'il existe un effet spécifique à la nature même des nanoparticules.

Cet effet consisterait à remplir les défauts, cavités, craquelures apparaissant au cours du processus de vieillissement et d'oxydation au niveau du substrat et de sa couche passivante (par exemple alumine) voire même au niveau du revêtement en lui-même.

De plus, pour obtenir des performances élevées, une faible teneur, par exemple de 2 % à 10% en poids suffit.

Le solvant peut être choisi parmi l'eau, les solvants organiques et leurs mélanges ; de préférence le solvant comprend une majorité en poids d'eau (plus de 50% en poids) ; de préférence encore le solvant est constitué par de l'eau.

Autrement dit, la composition selon l'invention présente l'avantage de pouvoir être formulée en milieu solvanté, mais aussi en milieu aqueux.

La formulation en milieu aqueux offre de nombreux bénéfices, par exemple : réduction des « COV », composition présentant une nocivité moindre vis-à-vis de l'homme (c'est-à-dire des opérateurs chargés d'appliquer la composition)) et de son environnement, moins de problème d'odeur et de sensation d'étouffement par exemple dans les zones confinées de l'avion.

En d'autres termes, la composition (et le procédé) selon l'invention est avantageusement respectueuse de l'environnement et satisfait aux dernières directives en matière de protection de l' environnement, directives du fait qu'elle a de préférence une teneur très faible en solvants organiques, généralement inférieure à 5% en poids, de préférence inférieure à 3% en poids, de préférence encore inférieure à 1% en poids.

Il s'agit là d'une différence et d'un avantage supplémentaire de la composition (et du procédé selon l'invention) par rapport aux procédés de l'art antérieur qui mettent en œuvre des teneurs plus élevées en solvants organiques.

C'est notamment la raison pour laquelle, comme on l'a vu plus haut, les résines alkydes modifiées et notamment les résines alkydes modifiées uréthane en milieu aqueux seront préférées, d'autant plus que ces résines en milieu aqueux donnent les meilleures propriétés en termes de temps de séchage et de résistance à la corrosion.

La composition selon l'invention peut se présenter sous la forme d'une émulsion (eau dans l'huile ou de présence huile dans l'eau) ou d'une solution.

La composition selon l'invention peut comprendre, en outre, au moins un agent dispersant.

L'agent dispersant peut être présent à raison de 0,5 % à 3 % en poids du poids total de la composition.

L'agent dispersant peut être le produit connu sous la dénomination DISPERBYK^{®} 2010.

La composition selon l'invention peut comprendre, en outre, au moins un agent anti-mousse.

L'agent anti-mousse peut être présent à raison de 0,1 % à 1 % en poids du poids total de la composition.

L'agent anti-mousse peut être par exemple le produit connu sous la dénomination de BYK^{®} 1798.

La composition selon l'invention peut comprendre, en outre, au moins un agent fongicide.

L'agent fongicide peut être présent à raison de 0,01 % à 0,5 % en poids du poids total de la composition.

L'agent fongicide peut être par exemple la pyrithione de sodium.

La composition selon l'invention peut comprendre, en outre, au moins un agent bactéricide.

L'agent bactéricide peut être présent à raison de 0,01 % à 0,5 % en poids du poids total de la composition.

L'agent bactéricide peut être choisi par exemple parmi la 2-Benzoisothiazole-3(2H)-one, la 2-Méthyl-2H-isothiazole-3-one, et leurs mélanges.

La composition selon l'invention peut comprendre, en outre, au moins un colorant et/ou au moins un pigment.

Chaque colorant ou pigment peut être présent à raison de 0,1 % à 1 % en poids du poids total de la composition.

Les pigments comprennent aussi les nacres, les laques et leurs mélanges.

Les pigments ou colorants peuvent être choisis parmi les pigments décoratifs, notamment colorés ou parmi les pigments UV.

Comme on l'a mentionné plus haut, certains pigments peuvent aussi jouer le rôle d'agents inhibiteurs de corrosion.

La composition selon l'invention peut comprendre, en outre, au moins un agent mouillant.

L'agent mouillant peut être présent à raison de 0,1 % à 5 % en poids du poids total de la composition.

Par agent mouillant, on attend un agent tensio-actif qui abaisse la tension de surface de la composition selon l'invention, plutôt que la tension interfaciale entre la composition et la surface du substrat. L'agent mouillant améliore le mélange des divers constituants de la composition et l'adhérence de la couche anti-corrosion sur une surface en métal ou toute autre surface lisse.

L'agent mouillant améliore les propriétés de mouillage et d'étalement sur divers substrats, mais aussi la qualité du réseau formé et les propriétés anti-corrosion intrinsèques de la couche.

La composition selon l'invention peut comprendre, en outre, au moins un agent rhéologique.

L'agent rhéologique peut être présent à raison de 0,01% à 5 % en poids, de préférence à raison de 0,01 % à 0,5 % en poids, du poids total de la composition.

L'agent rhéologique peut être choisi parmi les épaississants polyuréthane comme le Polyuréthane non ionique^{®} sous la dénomination de TAFIGEL^{®} PUR 60 et autres.

La composition selon l'invention peut comprendre en outre un ou plusieurs additifs, choisi(s) par exemple parmi les agents anti-peau, les siccatifs, les cires, etc.

L'additif ou chacun des additifs peut être présent à raison de 0,1 % à 1,0 % en poids du poids total de la composition.

La composition selon l'invention peut comprendre, en outre, au moins une charge.

La charge peut être présente à raison de 5 % à 20 % en poids du poids total de la composition.

La charge peut être choisie parmi les micas, les silices, les talcs, les argiles, et les poudres de PTFE, qui du fait de leur structure lamellaire ou nodulaire et/ou de leur taille, par exemple micrométrique ou nanométrique, peuvent optimiser certaines propriétés, telles que les propriétés anti-coulure, la dureté, la résistance aux rayures, et même les propriétés anti-corrosion de la couche.

La charge telle que le talc, le mica, la silice ou l'argile est généralement sous la forme de particules, ou de nanoparticules dont la surface peut être modifiée.

La composition selon l'invention peut être préparée en pesant et en dispersant, mélangeant ces composants au moyen de tout appareil de dispersion, mélange adéquate.

Par exemple, on peut commencer par peser la résine, l'agent dispersant éventuel, et l'agent anti-mousse éventuel et les disperser, mélanger, dans un appareil de dispersion, mélange, adéquat; puis ajouter dans l'ordre l'agent inhibiteur de corrosion organique et l'agent inhibiteur de corrosion inorganique solide dans l'appareil de dispersion et les mélanger ; puis ajouter dans l'ordre le fongicide, le bactéricide, le pigment et/ou le colorant éventuels dans l'appareil de dispersion et les mélanger; puis pré-mélanger l'agent mouillant et l'agent rhéologiques éventuels, les ajouter dans l'appareil de dispersion et les mélanger.

L'invention concerne également un procédé pour préparer une couche anti-corrosion sur une surface d'un substrat dans lequel :
- la composition telle que décrite plus haut est déposée, sur la surface du substrat pour donner une couche de la composition sur la surface du substrat ;
- ladite couche de la composition est séchée, moyennant quoi on obtient la couche anti-corrosion sur la surface du substrat.

Le procédé selon l'invention possède tous les avantages liés à la mise en œuvre dans ce procédé de la composition spécifique selon l'invention.

En particulier, le procédé selon l'invention permet la préparation en une seule passe, une seule opération, une seule étape de couches anti-corrosion possédant d'excellentes propriétés anti-corrosion.

Autrement dit, le procédé selon l'invention, permet de préparer des couches, films, d'une épaisseur sèche allant de 5 à 50 µm en une seule passe, étape, au lieu de plusieurs étapes dans les procédés analogues connus de dépôts de produits de protection contre la corrosion. Les couches, films obtenus sont donc, même pour des épaisseurs importantes des films monocouches homogènes et non des films constitués par plusieurs couches comme avec les procédés de l'art antérieur.

Les couches épaisses obtenues sont d'excellentes qualités, régulières et sans coulures, contrairement aux couches obtenues avec les procédés de l'art antérieur qui mettent en œuvre une composition qui n'est pas celle selon l'invention.

Le procédé d'application selon l'invention est fiable, rapide et d'un coût inférieur aux procédés de l'art antérieur.

Ce procédé de préparation d'une couche, film de protection contre la corrosion selon l'invention, peut facilement s'intégrer dans une chaîne classique existante comportant d'autres traitements du substrat antérieurs ou postérieurs au dépôt dudit film.

Le substrat selon l'invention peut être en tout matériau capable de recevoir une couche anti-corrosion. Le procédé selon l'invention peut être mis en œuvre avec des matériaux très divers avec toujours d'excellents résultats en termes de propriétés et avant tout de propriétés anti-corrosion de la couche obtenue.

Le substrat peut être un matériau choisi parmi les métaux; les alliages de métaux; les verres organiques ou minéraux; les polymères organiques tels que les polymères thermoplastiques (matières plastiques) ; le bois ; les céramiques ; les textiles ; les bétons ; les papiers; la pierre; les fibres de carbone; et les matériaux composites comprenant plusieurs des matériaux précédemment énumérés, tels que les matériaux composites comprenant des fibres de carbone comme les matières plastiques à renforts de fibres de carbone ; ce matériau étant éventuellement plaqué et/ou ayant subi un traitement de surface et/ou étant revêtu, par exemple peint.

Avantageusement, le substrat peut être en un matériau choisi parmi l'aluminium ; le titane ; le cuivre ; le fer; le magnésium ; et les alliages de ceux-ci, comme les aciers, par exemple les aciers inoxydables, les alliages d'aluminium, comme l'alliage d'aluminium 2024-T3, et l'Inconel ; la surface du substrat ayant éventuellement été plaquée et/ou ayant subi un traitement de surface et/ou étant revêtue, par exemple peinte.

Les alliages d'aluminium comprennent les alliages 7075, 6056 et 2024 comme l'alliage d'aluminium 2024-T3.

Les alliages de titane comprennent les alliages Ti6-4, Ti-15-3-3-3, Ti-6-2-2-2-2 et Ti-3-2-5.

Le substrat peut avoir une forme quelconque mais il a généralement la forme d'une plaque, tôle ou feuille. Le procédé selon l'invention permet cependant le dépôt de couches sur des surfaces de géométrie même très complexe.

Le substrat peut être constitué notamment de plusieurs plaques composées de matériaux différents, rivetées. La protection contre la corrosion conférée par la couche anti-corrosion selon l'invention est efficace à la fois sur la surface du/des substrat(s) mais également à l'intérieur des rivets.

La surface sur laquelle est déposée la couche peut n'être qu'une partie de la surface totale du substrat, mais il peut s'agir aussi de la totalité de ladite surface, par exemple on peut avec le procédé selon l'invention déposer une couche sur les deux faces d'un substrat en feuille.

Préalablement au dépôt de la composition, la surface est de préférence nettoyée et/ou activée et/ou décapée par un traitement chimique et/ou physique et/ou mécanique.

En effet, ce nettoyage est important afin d'obtenir une bonne adhésion de la couche déposée. Ces procédés de nettoyage sont connus de l'homme du métier : il peut s'agir d'un nettoyage par voie humide par exemple par des solutions acides ou basiques, d'un dégraissage alcalin ou par solvant ou bien d'un nettoyage par voie sèche, par exemple par grenaillage et/ou sablage et/ou flammage, etc.

Pour certains supports, un traitement particulier, du type promoteur d'adhérence, peut être ajouté.

De tels traitements de nettoyage et/ou d'activation sont connus de l'homme du métier et sont largement décrits dans l'art antérieur.

Sur la surface du substrat, de préférence nettoyée et activée, on effectue le dépôt de la composition anti-corrosion selon l'invention telle qu'elle a été décrite plus haut.

Les compositions selon l'invention permettent le dépôt de couches ou films fins, mais également le dépôt de couches ou films plus épais.

Avantageusement dans une seule opération, une couche de la composition est déposée avec une épaisseur humide de 10 à 100 µm, de préférence de 40 à 50 µm.

Avantageusement, la couche anti-corrosion (c'est-à-dire la couche finale séchée) a une épaisseur à l'état sec de 5 à 45 µm, de préférence de 10 à 25 µm, de préférence encore de 20 à 25 µm.

L'épaisseur de la couche anti-corrosion (c'est-à-dire de la couche finale séchée) est fonction de l'extrait sec de la composition.

La composition peut être déposée par toute technique connue, par exemple la composition peut être déposée par une technique choisie parmi la pulvérisation par exemple au moyen d'un pistolet, l'aspersion, le trempage, le brossage, ou le dépôt par aérosol.

Afin d'effectuer les finitions ou atteindre des zones difficiles d'accès par les techniques déjà citées, un dépôt par aérosol est possible.

De préférence, la composition est appliquée par pulvérisation par exemple au moyen d'un pistolet, de manière très simple, similaire à l'application d'une peinture ou d'un vernis.

L'épaisseur sèche souhaitée de la couche peut être facilement obtenue en modifiant par exemple les réglages des pistolets, le type de pistolet et la distance d'application.

L'opération de dépôt, application, de la composition selon l'invention sur la surface est généralement réalisée à une température de 7°C à 40°C, de préférence de 15°C à 25°C, par exemple de 23°C.

A l'issue du dépôt, on obtient un substrat dont la surface est revêtue par une couche de la composition selon l'invention. Cette couche est une couche que l'on peut qualifier de couche « humide » car elle contient encore du solvant tel que de l'eau.

Généralement, le séchage de la couche de composition est réalisé à la température ambiante, et à l'air libre, pendant une durée de 15 minutes à 7 jours, de préférence pendant une durée de 15 à 60 minutes.

En effet, une durée de séchage 15 à 60 min est suffisante pour permettre la manipulation ou pour que la couche soit recouvrable, tandis qu'une durée plus élevée, de préférence de 7 jours est nécessaire pour obtenir une réticulation totale.

Partempérature ambiante, on entend généralement une température de 15°C à 30°C, notamment de 20°C à 25°C.

On peut, de préférence, ne déposer qu'une seule couche anti-corrosion par le procédé selon l'invention en formant ainsi un revêtement monocouche, cette couche anti-corrosion ayant généralement une épaisseur sèche telle que définie plus haut.

Selon l'invention, d'excellentes propriétés sont en effet obtenues avec une telle couche unique, un tel revêtement monocouche.

On peut aussi déposer, mais cela n'est généralement pas préféré, plusieurs couches anti-corrosion en formant ainsi un revêtement multicouche. On peut déposer généralement de 1 à 3 couches, de préférence 1 couche.

Selon les divers additifs incorporés dans la composition, la couche anti-corrosion pourra posséder des propriétés variées.

Avantageusement, ladite surface est revêtue uniquement avec ladite couche anti-corrosion, contenant de préférence un colorant et/ou un pigment, formant ainsi un revêtement monocouche sur la dite surface.

Dans ce cas, de préférence, le substrat est en un métal ou en un alliage métallique et ledit revêtement monocouche est un revêtement appelé « *Direct to Metal*» ou « *DTM ».*

L'invention a également trait à une couche anti-corrosion susceptible d'être préparée par le procédé décrit ci-dessus.

L'invention a trait, en outre, à un substrat comprenant au moins une surface revêtue par au moins une couche anti-corrosion telle que décrite plus haut.

Avantageusement, ladite surface est revêtue uniquement avec ladite couche anti-corrosion (aucune autre couche de revêtement n'étant présente), et de préférence ladite couche contient au moins un colorant et/ou un pigment.

En d'autres termes, de préférence, la couche anti-corrosion peut être appliquée sous la forme d'un revêtement monocouche coloré ou non, pigmenté ou non, sur la surface du substrat.

Autrement dit, une telle couche anti-corrosion unique peut être utilisée seule en tant que revêtement anti-corrosion, protecteur.

Une telle couche unique anti-corrosion forme ainsi un revêtement monocouche sur ladite surface ; de préférence le substrat est en un métal ou en un alliage métallique et ledit revêtement monocouche est alors un revêtement appelé « *Direct to Metal*» ou « *DTM ».*

Le substrat peut être constitué par une partie ou l'ensemble d'un aéronef tel qu'un avion, un hydravion, un hélicoptère, ou un drone; d'un véhicule spatial; d'une fusée; d'un navire; d'un aéroglisseur; d'une plateforme « offshore »; d'un véhicule automobile tel qu'une voiture, une motocyclette, ou un camion; d'un gazoduc, d'un oléoduc, ou d'un aqueduc ; d'un véhicule ferroviaire tel qu'une locomotive ou un wagon ; d'une éolienne ; d'une hydrolienne.

L'invention a également trait à l'utilisation de la couche anti-corrosion selon l'invention telle que décrite plus haut pour conférer des propriétés de résistance à la corrosion à une surface d'un substrat, en particulier à une surface en un matériau choisi parmi les métaux comme l'aluminium, les alliages de métaux comme les alliages d'aluminium, et les matériaux composites comprenant un métal ou un alliage de métal.

De préférence, le substrat est en aluminium ou en alliage d'aluminium, et la couche anti-corrosion confère à la surface une résistance à la corrosion dans le test de résistance à la corrosion au brouillard salin, conformément à la norme NF EN ISO 9227:2012, de plus de 1000 heures, de préférence de plus de 2000 heures, et de préférence encore de plus de 3000 heures pour une couche d'une épaisseur de 25 µm à l'état sec

Avantageusement, ladite surface n'est revêtue que par ladite couche anti-corrosion (séchée) ; en d'autres termes, ladite couche anti-corrosion est utilisée seule, en tant que couche unique sur la surface.

Autrement dit, ladite couche anti-corrosion unique forme un revêtement monocouche sur la surface.

Lorsque cette surface est une surface en métal ou en alliage de métal, un tel revêtement monocouche est appelé un revêtement « *DTM* » (« *Direct To Metal* » en anglais).

Ce revêtement « DTM » anti-corrosion donne de très bonnes propriétés de résistance à la corrosion et de protection mécanique au substrat.

La raison pour cela est que la couche anti-corrosion selon l'invention, ou préparée par le procédé selon l'invention, permet, de manière surprenante seule, par elle-même -sans qu'une autre couche, telle qu'une couche de primaire ou une couche de peinture ne soit utilisée-de communiquer en même temps une résistance à la corrosion, une protection contre les produits chimiques, une résistance mécanique, une protection contre les rayures, d'une surface en métal ou en alliage métallique.

Cela permet d'éviter le dépôt d'autres couches en plus de la couche anti-corrosion et conduit à la réduction des temps de cycles et de production, et l'allègement de la structure, qui sont particulièrement intéressantes, par exemple pour la réduction des coûts dans l'industrie aérospatiale.

Finalement, le procédé selon l'invention est simple, fiable, rapide et moins coûteux que les procédés de l'art antérieur car une seule étape de revêtement et une seule couche peuvent en remplacer plusieurs.

### EXPOSÉ DÉTAILLÉ DE MODES DE RÉALISATION PARTICULIERS

### EXEMPLES.

Dans les exemples expérimentaux qui suivent, des compositions, formulations selon l'invention sont préparés.

Puis, ces compositions, formulations selon l'invention sont déposées, appliquées sous la forme de films sur la surface de substrats, à savoir la surface de plaques en alliage d'aluminium.

Les substrats revêtus des films sont séchés et les propriétés des films selon l'invention ainsi préparés sont évaluées.

### Exemple 1.

### • Préparation d'une composition, formulation, selon l'invention.

On pèse :
- 79,74 g d'une émulsion dans l'eau de résine alkyde modifiée polyuréthane (PU) disponible sous la dénomination WorléeSol^{®} E 150 W auprès de la société Worlée de Lauenburg, Allemagne ;
- 2,00 g d'un agent dispersant, qui est un copolymère comprenant des groupes ayant une affinité pour les pigments, disponible auprès de la société BYK sous la dénomination DISPERBYK^{®} 2010; et
- 0,30 g d'un agent anti-mousse disponible auprès de la société BYK sous la dénomination (BYK^{®} 1798).

Les trois composants ainsi pesés sont placés ensemble dans un disperseur et le mélange est agité pendant 5 minutes.

On ajoute ensuite dans l'ordre, dans le vortex d'agitation formé dans le disperseur :
- 8,5 g d'un pigment anti-corrosion organique, le 2-MBT, disponible auprès de la société LANXESS sous la dénomination commerciale VULKACIT MERCAPTO/C; et
- 8,5 g d'un pigment anti-corrosion inorganique, le Zinc Calcium Strontium Aluminium Orthophosphate Silicate Hydrate, disponible auprès de la société HEUBACH sous la dénomination commerciale HEUCOPHOS^{®} ZCP+.

Le mélange est maintenu pendant 10 minutes sous forte agitation, à savoir à une vitesse de 1000 trs/min.

On ajoute ensuite dans l'ordre :
- 0,072 g d'un fongicide, la Pyrithione de Sodium ;
- 0,012 g d'un bactéricide, la 2-Benzisothiazole-3(2H)-one, 2-Méthyl-2H-isothiazole-3-one ;
- 0,10 g d'un pigment anti-UV, sous la forme d'une solution de Sulfostryryl biphenyl sel de sodium ; et
- 0,40 g d'un pigment, le jaune Cl 11680 46%.

Le mélange est maintenu au minimum 30 minutes sous agitation.

On prépare séparément un prémélange de 0,30 g d'un agent mouillant, le dipropylene glycol methyl ether (DPGME) et de 0,073 g d'un agent rhéologique qui est un Polyuréthane non ionique disponible auprès de la société Munzig^{®}.

On ajoute ensuite ce prémélange dans le vortex et on continue à agiter pendant 30 minutes.

### • Substrats.

Les substrats sont des panneaux, plaques, en alliage d'aluminium 2024-T3.

### • Préparation des substrats.

Le cuivre présent dans l'alliage d'aluminium 2024-T3 tend à détériorer la couche protectrice d'oxyde naturellement présente. Par conséquent, il est important de préparer la surface dudit alliage pour éliminer les contaminants de surface, les oxydes qui pourraient perturber les étapes suivantes du procédé de préparation du film, et les plaques subissent donc quatre traitements de surface successifs.

Lors d'un premier traitement de surface, les plaques, panneaux, d'alliage d'aluminium (2024-T3) sont tout d'abord dégraissés avec du DIESTONE^{®} DLS afin d'éliminer la poussière et tout autre contaminant à la surface des plaques.

Puis, lors d'un deuxième traitement de surface, les plaques sont dégraissées dans un bain de SOCOCLEAN^{®} A3431 dont la concentration volumique est de 10%, chauffé entre 40°C et 45°C, et sous légère agitation, pendant 5 à 30 minutes. Les plaques sont ensuite rincées deux fois. Le premier rinçage est effectué à l'eau de ville pendant deux minutes et le second rinçage est réalisé à l'eau distillée pendant 2 minutes également.

Le troisième traitement de surface est une attaque sodique dans un bain de soude dont la concentration est de 40 g/L, chauffé entre 50°C et 65 °C pendant 1 à 5 minute(s). Les plaques sont ensuite rincées deux fois à l'eau distillée pendant 2 minutes.

Le quatrième traitement de surface est un traitement de désoxydation dans un bain d'acide nitrique dont la concentration est comprise entre 400 et 500 g/L. Les plaques sont plongées dans ce bain à température ambiante pendant 5 à 15 minutes.

Les plaques sont ensuite rincées deux fois à l'eau distillée pendant 2 minutes, puis séchées pendant quelques minutes à 60°C.
- Les plaques doivent être utilisées dans les 12 heures qui suivent ces traitements de surface.
- Application de la formulation sur les substrats en alliage d'aluminium.

La formulation est appliquée, déposée par pulvérisation à l'aide d'un pistolet de marque KREMLIN^{®} sur les plaques en alliage d'aluminium, afin d'obtenir un film, couche ayant une épaisseur à l'état humide de 60 µm.

Les plaques ainsi revêtues d'un film ou couche humide sont alors laissées à la température ambiante pendant 7 jours, à l'issue desquels on obtient des plaques en alliage d'aluminium revêtues d'une couche protectrice contre la corrosion, à l'état sec.

Les échantillons, c'est-à-dire, lesdites plaques en alliage d'aluminium revêtues d'une couche protectrice contre la corrosion, à l'état sec sont alors prêtes à être caractérisées.

### • Caractérisation des échantillons.

- Epaisseur :
   L'épaisseur moyenne du film ou couche déposé(e), à l'état sec, est mesurée selon la norme ISO 2360 :2003 avec un appareil de type MiniTest 7400 commercialisé par ElektroPhysik équipé de la sonde N4 pour les panneaux, plaques en alliage d'aluminium (Mesures basées sur les courants de Foucault).
   10 mesures sont effectuées à la surface de l'échantillon. L'épaisseur moyenne est relevée.

Cette épaisseur est de 20-25 µm.
- Résistance à la corrosion au brouillard salin (« *Salt Spray Test* » ou « *SST* » en anglais):
   Le test de résistance à la corrosion au brouillard salin est utilisé pour estimer la résistance à la corrosion de matériaux métalliques. Ce test est effectué selon la norme ISO 9227 :2012. Les plaques en alliage d'aluminium revêtues sont placées dans une enceinte (Q-FOG Cyclic Corrosion Tester de Q-Panel) à 35 °C ± 2°C sur des supports avec un angle de 20°± 5° par rapport à la verticale. Les plaques sont exposées à un brouillard artificiel issu d'une solution de chlorure de sodium. Cette solution contient 50 g/L ± 5 g/L de chlorure de sodium, et son pH est compris entre 6,5 et 7,2 à 25°C ± 5°C. Les plaques sont observées de façon régulière et la présence de corrosion (corrosion uniforme, piqures, etc.) est notée.

La corrosion est inférieure à 3% de la surface après 3000 heures pour une épaisseur sèche de film de 25 µm.

## Revendications

1. Composition anti-corrosion, **caractérisée en ce qu'**elle comprend :
a) au moins une résine liante organique choisie parmi les résines alkydes, les résines alkydes modifiées comme les résines alkydes modifiées uréthanes ou les résines alkydes modifiées époxy, les résines terpéniques, les résines acryliques comme les résines styrène-acryliques, les résines hydrocarbures, et les résines vinyliques comme les résines acryliques vinyliques et les résines styrèniques vinyliques ; de préférence, la résine liante est choisie parmi les résines alkydes modifiées uréthane aussi appelées résines alkydes uréthanes;
b) au moins un agent inhibiteur de corrosion organique qui est un composé comprenant au moins une fonction thiol et/ou au moins une fonction thione choisi parmi le 2-Mercaptobenzothiazole ou 2-MBT, aussi appelé Benzothiazole-2-thiol ou 2(3H)-Benzothiazolethione, le 6-Méthyl-2-mercaptobenzothiazole, le Naphto[1,2-d]thiazole-2(1H)-thione, le 7-méthyl-benzothiazole-2-thiol, la 4-méthyl-2(3H)-benzothiazolethione, la 6-Ethyl-2-benzothiazolinethione, le 2,5-Dimercapto-1,3,4-thiadiazole ou DMTD, le mercaptobenzimidazole, et les sels de ceux-ci, par exemple les sels de métaux ou d'amine de ceux-ci ; de préférence l'agent inhibiteur de corrosion organique est choisi parmi le sel de sodium (1/1) de la Benzothiazolethione, le sel de zinc (2 :1) de la Benzothiazolethione, et le sel de cyclohexylamine du 2-Mercaptobenzothiazole ;
c) éventuellement un solvant ; et
d) au moins un agent inhibiteur de corrosion inorganique solide choisi parmi les oxydes de métaux tels que les oxydes de zinc, de cérium (IV), de titane, de zirconium de fer, de praséodyme (III) et d'antimoine ; les oxydes de métalloïdes; l'orthophosphosilicate de zinc calcium strontium aluminium hydraté ; la silice amorphe synthétique échangée par des ions calcium ; le polyphosphate de strontium aluminium hydraté ; le sulfate de baryum ; le 5-nitroisophtalate de zinc; le phosphosilicate de calcium et de strontium rendu organophile ; le phosphate de zinc notamment rendu organophile ; le molybdate de zinc notamment rendu organophile; le polyphosphate d'aluminium modifié; le titanate de strontium ; l'oxyde d'antimoine et d'étain (ATO) ; et le molybdène ; ledit agent inhibiteur de corrosion inorganique solide présentant une taille de particules nanométrique, sachant que, par taille de particules nanométrique, on entend que la taille moyenne, par exemple le diamètre moyen (d₅₀), des particules nanométriques est de 1 à 100 nm, de préférence de 5 à 50 nm, de préférence encore de 10 à 50 nm, mieux de 10 à 20 nm, la taille des particules étant mesurée par MET (Microscopie Electronique en Transmission).

2. Composition selon la revendication 1, comprenant en % en poids par rapport au poids total de la composition :
- de 30 % à 60 % en poids de la résine liante organique ;
- de 5 % à 20 % en poids de l'agent inhibiteur de corrosion organique qui est au moins un composé comprenant au moins une fonction thiol et/ou au moins une fonction thione;
- de 5 % à 20 % en poids de l'agent inhibiteur de corrosion inorganique solide ;
- de 0 % à 50 %, de préférence de 10 % à 40 %, en poids du solvant.

3. Composition selon l'une quelconque des revendications précédentes, qui comprend en outre au moins un accélérateur, tel qu'un thiocarbamate comme le 1-pyrrolidine-dithiocarbamate ou PYRR ; de préférence, la composition comprend de 2 à 20 %, de préférence de 5 à 10 % en poids d'accélérateur par rapport au poids total de la composition.

4. Composition selon l'une quelconque des revendications précédentes, dans laquelle l'inhibiteur de corrosion inorganique est choisi parmi les inhibiteurs de corrosion sous la forme de pigments.

5. Composition selon l'une quelconque des revendications précédentes, dans laquelle le solvant est choisi parmi l'eau, les solvants organiques et leurs mélanges; de préférence le solvant comprend une majorité en poids d'eau ; de préférence encore le solvant est constitué par de l'eau.

6. Composition selon l'une quelconque des revendications précédentes, qui comprend en outre au moins un agent dispersant, de préférence à raison de 0,5 % à 3 % en poids du poids total de la composition ; et/ou au moins un agent anti-mousse, de préférence à raison de 0,1 % à 1 % en poids du poids total de la composition ; et/ou au moins un agent fongicide, de préférence à raison de 0,01 % à 0,5 % en poids du poids total de la composition ; et/ou au moins un agent bactéricide, de préférence à raison de 0,01 % à 0,5 % en poids du poids total de la composition ; et/ou au moins un colorant et/ou au moins un pigment, de préférence à raison de 0,1 % à 1 % en poids du poids total de la composition pour chaque colorant ou pigment; et/ou au moins un agent mouillant, de préférence à raison de 0,1 % à 5 % en poids du poids total de la composition ; et/ou au moins un agent rhéologique, de préférence à raison de 0,01 % à 5 % en poids, de préférence encore à raison de 0,01 % à 0,5 % en poids, du poids total de la composition ; et/ou un ou plusieurs additif(s), choisi(s) par exemple parmi les agents anti-peau, les siccatifs, les cires, de préférence chacun à raison de 0,1 % à 1 % en poids du poids total de la composition ; et/ou au moins une charge, de préférence à raison de 5 % à 20 % en poids du poids total de la composition.

7. Procédé pour préparer une couche anti-corrosion sur une surface d'un substrat dans lequel :
- la composition selon l'une quelconque des revendications 1 à 6 est déposée, sur la surface du substrat pour donner une couche de la composition sur la surface du substrat ; de préférence, la composition est déposée par une technique choisie parmi la pulvérisation par exemple au moyen d'un pistolet, l'aspersion, le trempage, le brossage, ou le dépôt par aérosol,
- ladite couche de la composition est séchée, moyennant quoi on obtient la couche anti-corrosion sur la surface du substrat ; de préférence, la couche anti-corrosion a une épaisseur à l'état sec de 5 à 45 µm, de préférence encore de 10 à 25 µm, mieux de 20 à 25 µm.

8. Procédé selon la revendication 7, dans lequel, dans une seule opération, une couche de la composition est déposée avec une épaisseur humide de 10 à 100 µm, de préférence de 40 à 50 µm.

9. Procédé selon l'une quelconque des revendications 7 à 8, dans lequel le substrat est en un matériau choisi parmi les métaux ; les alliages de métaux ; les verres organiques ou minéraux ; les polymères organiques tels que les polymères thermoplastiques ; le bois ; les céramiques ; les textiles ; les bétons ; les papiers ; la pierre ; les fibres de carbone ; et les matériaux composites comprenant plusieurs des matériaux précédemment énumérés tels que les matériaux composites comprenant des fibres de carbone comme les matériaux plastiques à renforts de fibres de carbone ; ce matériau étant éventuellement plaqué et/ou ayant subi un traitement de surface et/ou étant revêtu, par exemple peint ; de préférence, le substrat est en un matériau choisi parmi l'aluminium ; le titane; le cuivre; le fer; le magnésium ; et les alliages de ceux-ci, comme les aciers, par exemple les aciers inoxydables, les alliages d'aluminium, comme l'alliage d'aluminium 2024-T3, et l'Inconel ; la surface du substrat ayant éventuellement été plaquée et/ou ayant subi un traitement de surface et/ou étant revêtue, par exemple peinte.

10. Procédé selon l'une quelconque des revendications 7 à 9, dans lequel préalablement au dépôt de la composition, la surface est nettoyée et/ou activée et/ou décapée par un traitement chimique et/ou physique et/ou mécanique.

11. Procédé selon l'une quelconque des revendications 7 à 10, dans lequel le séchage de la couche de composition est réalisé à la température ambiante, et à l'air libre, pendant une durée de 15 minutes à 7 jours, de préférence pendant une durée de 15 à 60 minutes.

12. Procédé selon l'une quelconque des revendications 7 à 11, dans lequel ladite surface est revêtue uniquement avec ladite couche anti-corrosion, contenant de préférence un colorant et/ou un pigment, formant ainsi un revêtement monocouche sur ladite surface, de préférence le substrat est en un métal ou en un alliage métallique et ledit revêtement monocouche est un revêtement appelé « *Direct to Metal*» ou « *DTM* ».

13. Couche anti-corrosion préparée par le procédé selon l'une quelconque des revendications 7 à 12.

14. Substrat comprenant au moins une surface revêtue par au moins une couche anti-corrosion selon la revendication 13 ; de préférence, au moins une surface du substrat est revêtue uniquement avec ladite couche anti-corrosion, contenant de préférence un colorant et/ou un pigment, formant ainsi un revêtement monocouche sur ladite surface, de préférence le substrat est en un métal ou en un alliage métallique et ledit revêtement monocouche est un revêtement appelé « *Direct to Metal*» ou « *DTM* ».

15. Substrat selon la revendication 14 qui est constitué par une partie ou l'ensemble d'un aéronef tel qu'un avion, un hydravion, un hélicoptère, ou un drone; d'un véhicule spatial; d'une fusée; d'un navire; d'un aéroglisseur; d'une plateforme « offshore »; d'un véhicule automobile tel qu'une voiture, une motocyclette, ou un camion ; d'un gazoduc, d'un oléoduc, ou d'un aqueduc ; d'un véhicule ferroviaire tel qu'une locomotive ou un wagon ; d'une éolienne ; d'une hydrolienne.

16. Utilisation de la couche anti-corrosion selon la revendication 13, pour conférer des propriétés de résistance à la corrosion à une surface d'un substrat, en particulier à une surface en un matériau choisi parmi les métaux comme l'aluminium, les alliages de métaux comme les alliages d'aluminium, et les matériaux composites comprenant un métal ou un alliage de métal ; de préférence le substrat est en aluminium ou en un alliage d'aluminium, et la couche anti-corrosion confère à la surface une résistance à la corrosion dans le test de résistance à la corrosion au brouillard salin, conformément à la norme NF EN ISO 9227:2012, de plus de 1000 heures, de préférence de plus de 2000 heures, et de préférence encore de plus de 3000 heures pour une couche d'une épaisseur de 25 µm à l'état sec.

17. Utilisation selon la revendication 16, dans laquelle ladite surface n'est revêtue que par ladite couche anti-corrosion.

## Patentansprüche

1. Korrosionsschutzzusammensetzung, **dadurch gekennzeichnet, dass** sie Folgendes umfasst:
a) zumindest ein organisches Bindeharz, ausgewählt aus Alkydharzen, modifizierten Alkydharzen wie urethanmodifizierten Alkydharzen oder epoxymodifizierten Alkydharzen, Terpenhärzen, Acrylharzen wie Styrol-Acrylharzen, Kohlenwasserstoffharzen und Vinylharzen wie Acryl-Vinylharzen und Styrol-Vinylharzen; wobei das Bindeharz bevorzugt aus urethanmodifizierten Alkydharzen, auch Alkyd-Urethanharze genannt, ausgewählt wird;
b) zumindest einen organischen Korrosionsinhibitor, der eine Verbindung ist, die zumindest eine Thiolfunktion und/oder zumindest eine Thionfunktion umfasst, die aus 2-Mercaptobenzothiazol oder 2-MBT, auch Benzothiazol-2-thiol oder 2(3H) -Benzothiazolthion genannt, 6-Methyl-2-mercaptobenzothiazol, Naphtho[1,2-d]thiazol-2 (1H)-thion, 7-Methylbenzothiazol-2-thiol, 4-Methyl-2(3H)-benzothiazolthion, 6-Ethyl-2-benzothiazolinthion, 2,5-Dimercapto-1,3,4-thiadiazol oder DMTD, Mercaptobenzimidazol und Salzen davon, beispielsweise Metall- oder Aminsalzen davon, ausgewählt ist; wobei der organische Korrosionsinhibitor bevorzugt aus dem Natriumsalz (1/1) von Benzothiazolthion, dem Zinksalz (2:1) von Benzothiazolthion und dem Cyclohexylaminsalz von 2-Mercaptobenzothiazol ausgewählt wird;
c) gegebenenfalls ein Lösungsmittel; und
d) zumindest einen festen anorganischen Korrosionsinhibitor, ausgewählt aus Metalloxiden wie Zink-, Cer(IV)-, Titan-, Zirkonium-, Eisen-, Praseodym(III)- und Antimonoxiden, Metalloidoxiden, hydratisiertem Zink-Kalzium-Strontium-Aluminium-Orthophosphosilikat, synthetischem, amorphem Siliziumdioxid, das durch Kalziumionen ausgetauscht wird, hydratisiertem Strontium-AluminiumPolyphosphat, Bariumsulfat, Zink-5-nitroisophthalat, organophil gemachtem Kalzium- und Strontiumphosphosilikat, Zinkphosphat, insbesondere organophil gemacht; Zinkmolybdat, insbesondere organophil gemacht; modifiziertem Aluminiumpolyphosphat; Strontiumtitanat; Antimon-Zinnoxid (ATO); und Molybdän; wobei besagter fester anorganischer Korrosionsinhibitor eine Teilchengröße im Nanometerbereich aufweist, wobei unter der Teilchengröße im Nanometerbereich zu verstehen ist, dass die mittlere Teilchengröße, beispielsweise der mittlere Durchmesser (d₅₀), der nanometergroßen Teilchen 1 bis 100 nm, bevorzugt 5 bis 50 nm, bevorzugter 10 bis 50 nm, besonders bevorzugt 10 bis 20 nm beträgt, wobei die Partikelgröße mittels TEM (Transmissionselektronenmikroskopie) gemessen wird.

2. Zusammensetzung nach Anspruch 1, die in Gew.-% bezogen auf das Gesamtgewicht der Zusammensetzung Folgendes umfasst:
- 30 bis 60 Gew.-% organisches Bindeharz;
- 5 bis 20 Gew.-% organischer Korrosionsinhibitor, bei dem es sich um zumindest eine Verbindung handelt, die zumindest eine Thiolfunktion und/oder zumindest eine Thionfunktion umfasst;
- 5 bis 20 Gew.-% fester anorganischer Korrosionsinhibitor;
- 0 bis 50 Gew.-%, bevorzugt 10 bis 40 Gew.-% Lösungsmittel.

3. Zusammensetzung nach einem der vorstehenden Ansprüche, die weiter zumindest einen Beschleuniger, wie ein Thiocarbamat, wie ein 1-Pyrrolidindithiocarbamat oder PDTC (*PYRR*)*,* umfasst, wobei bevorzugt die Zusammensetzung bezogen auf das Gesamtgewicht der Zusammensetzung 2 bis 20 Gew.-%, bevorzugt 5 bis 10 Gew.-% Beschleuniger umfasst.

4. Zusammensetzung nach einem der vorstehenden Ansprüche, worin der anorganische Korrosionsinhibitor unter den Korrosionsinhibitoren in Form von Pigmenten ausgewählt ist.

5. Zusammensetzung nach einem der vorstehenden Ansprüche, worin das Lösungsmittel aus Wasser, organischen Lösungsmitteln und Mischungen davon ausgewählt ist; wobei das Lösungsmittel bevorzugt eine Gewichtsmehrheit an Wasser umfasst; wobei das Lösungsmittel bevorzugt aus Wasser besteht.

6. Zusammensetzung nach einem der vorstehenden Ansprüche, die weiter zumindest ein Dispergiermittel, bevorzugt in einer Menge von 0,5 bis 3 Gew.-% des Gesamtgewichts der Zusammensetzung, und/oder zumindest ein Antischaummittel, bevorzugt in einer Menge von 0,1 bis 1 Gew.-% des Gesamtgewichts der Zusammensetzung, und/oder zumindest ein fungizides Mittel, bevorzugt in einer Menge von 0,01 bis 0,5 Gew.-% des Gesamtgewichts der Zusammensetzung, und/oder zumindest ein bakterizides Mittel, bevorzugt in einer Menge von 0,01 bis 0,5 Gew.-% des Gesamtgewichts der Zusammensetzung; und/oder zumindest einen Farbstoff und/oder zumindest ein Pigment, bevorzugt in einer Menge von 0,1 bis 1 Gew.-% des Gesamtgewichts der Zusammensetzung für jeden Farbstoff oder jedes Pigment; und/oder zumindest ein Netzmittel, bevorzugt in einer Menge von 0,1 bis 5 Gew.-% des Gesamtgewichts der Zusammensetzung; und/oder zumindest ein rheologisches Mittel, bevorzugt in einer Menge von 0,01 bis 5 Gew.-%, bevorzugter von 0,01 bis 0,5 Gew.-% des Gesamtgewichts der Zusammensetzung; und/oder einen oder mehrere Zusatzstoffe, beispielsweise ausgewählt aus Mitteln zur Verhinderung der Hautbildung, Trockenmitteln, Wachsen, bevorzugt jeweils in einer Menge von 0,1 bis 1 Gew.-% des Gesamtgewichts der Zusammensetzung; und/oder zumindest einen Füllstoff, bevorzugt in einer Menge von 5 bis 20 Gew.-% des Gesamtgewichts der Zusammensetzung, umfasst.

7. Verfahren zur Herstellung einer Korrosionsschutzschicht auf einer Oberfläche eines Substrats, worin:
- die Zusammensetzung nach einem der Ansprüche 1 bis 6 auf die Oberfläche des Substrats aufgebracht wird, um eine Schicht der Zusammensetzung auf der Oberfläche des Substrats zu ergeben; wobei die Zusammensetzung bevorzugt durch eine Technik aufgebracht wird, die aus Spritzen, beispielsweise mit einer Pistole, Aufsprühen, Eintauchen, Bürsten oder Aerosolabscheidung ausgewählt ist;
- die besagte Schicht der Zusammensetzung getrocknet wird, wodurch die Korrosionsschutzschicht auf der Oberfläche des Substrats erhalten wird; wobei bevorzugt die Korrosionsschutzschicht im trockenen Zustand eine Dicke von 5 bis 45 µm, bevorzugter von 10 bis 25 µm, besonders bevorzugt von 20 bis 25 µm aufweist.

8. Verfahren nach Anspruch 7, worin in einem einzigen Arbeitsgang eine Schicht der Zusammensetzung mit einer Nassdicke von 10 bis 100 µm, bevorzugt von 40 bis 50 µm, aufgebracht wird.

9. Verfahren nach einem der Ansprüche 7 bis 8, worin das Substrat aus einem Material besteht, das aus Metallen; Metalllegierungen; organischen oder mineralischen Gläsern; organischen Polymeren wie thermoplastischen Polymeren; Holz; Keramik; Textilien; Beton; Papiere; Stein; Kohlenstofffasern; und Verbundmaterialien, die mehrere der vorstehend aufgeführten Materialien umfassen, wie Verbundmaterialien, die Kohlenstofffasern umfassen, wie kohlenstofffaserverstärkte Kunststoffe; ausgewählt ist; wobei dieses Material gegebenenfalls plattiert und/oder oberflächenbehandelt und/oder beschichtet, beispielsweise lackiert ist; wobei das Substrat bevorzugt aus einem Material besteht, das aus Aluminium; Titan; Kupfer; Eisen; Magnesium; und Legierungen davon, wie Stählen, beispielsweise rostfreien Stählen, Aluminiumlegierungen, wie der Aluminiumlegierung 2024-T3, und Inconel, ausgewählt ist; wobei die Oberfläche des Substrats gegebenenfalls plattiert und/oder oberflächenbehandelt und/oder beschichtet, beispielsweise lackiert, ist.

10. Verfahren nach einem der Ansprüche 7 bis 9, worin vor dem Aufbringen der Zusammensetzung die Oberfläche durch chemische und/oder physikalische und/oder mechanische Behandlung gereinigt und/oder aktiviert und/oder gebeizt wird.

11. Verfahren nach einem der Ansprüche 7 bis 10, worin das Trocknen der Schicht der Zusammensetzung bei Raumtemperatur und i ins Freie über einen Zeitraum von 15 Minuten bis 7 Tagen, bevorzugt über einen Zeitraum von 15 bis 60 Minuten, durchgeführt wird.

12. Verfahren nach einem der Ansprüche 7 bis 11, worin besagte Oberfläche ausschließlich mit besagter Korrosionsschutzschicht beschichtet wird, die bevorzugt einen Farbstoff und/oder ein Pigment enthält, wodurch auf diese Weise eine einschichtige Beschichtung auf besagter Oberfläche gebildet wird, wobei das Substrat bevorzugt aus einem Metall oder einer Metalllegierung besteht und besagte einschichtige Beschichtung eine Beschichtung ist, die als "Direct-to-Metal" oder "DTM" bezeichnet wird.

13. Korrosionsschutzschicht, die nach dem Verfahren nach einem der Ansprüche 7 bis 12 hergestellt ist.

14. Substrat, das zumindest eine Oberfläche umfasst, die mit zumindest einer Korrosionsschutzschicht nach Anspruch 13 beschichtet ist; wobei bevorzugt zumindest eine Oberfläche des Substrats ausschließlich mit besagter Korrosionsschutzschicht beschichtet ist, die bevorzugt einen Farbstoff und/oder ein Pigment enthält, wodurch auf diese Weise eine einschichtige Beschichtung auf besagter Oberfläche gebildet wird, wobei das Substrat bevorzugt aus einem Metall oder einer Metalllegierung besteht und die besagte einschichtige Beschichtung eine Beschichtung ist, die als "Direct-to-Metal" oder "DTM" bezeichnet wird.

15. Substrat nach Anspruch 14, das aus einem Teil oder der Gesamtheit eines Luftfahrzeugs, wie eines Flugzeugs, eines Wasserflugzeugs, eines Hubschraubers oder einer Drohne; eines Raumfahrzeugs; einer Rakete; eines Schiffes; eines Luftkissenfahrzeugs; einer Offshore-Plattform; eines Kraftfahrzeugs, wie eines Autos, eines Motorrads oder eines Lastkraftwagens; einer Erdgasleitung, einer Pipeline oder eines Aquädukts; eines Schienenfahrzeugs, wie einer Lokomotive oder eines Waggons; einer Windkraftanlage; einer Meeresströmungskraftwerk besteht.

16. Verwendung der Korrosionsschutzschicht nach Anspruch 13 zur Verleihung von Korrosionsbeständigkeitseigenschaften an eine Oberfläche eines Substrats, insbesondere an eine Oberfläche, die aus einem Material besteht, das aus Metallen wie Aluminium, Metalllegierungen wie Aluminiumlegierungen und Verbundwerkstoffen, die ein Metall oder eine Metalllegierung umfassen, ausgewählt ist; wobei das Substrat bevorzugt aus Aluminium oder aus einer Aluminiumlegierung besteht, und die Korrosionsschutzschicht der Oberfläche eine Korrosionsbeständigkeit im Salznebel-Korrosionsbeständigkeitstest gemäß Norm NF EN ISO 9227:2012 von mehr als 1000 Stunden, bevorzugt von mehr als 2000 Stunden, und besonders bevorzugt von mehr als 3000 Stunden für eine Schicht mit einer Dicke von 25 µm im trockenen Zustand verleiht.

17. Verwendung nach Anspruch 16, wobei besagte Oberfläche nur mit besagter Korrosionsschutzschicht beschichtet ist.

## Claims

1. Anti-corrosion composition, **characterised in that** it comprises:
a) at least one organic binding resin selected from alkyd resins, modified alkyd resins such as urethane modified alkyd resins or epoxy modified alkyd resins, terpene resins, acrylic resins such as styrene-acrylic resins, hydrocarbon resins, and vinyl resins such as vinyl acrylic resins and vinyl styrene resins; preferably, the binding resin is selected from urethane modified alkyd resins, also called urethane alkyd resins;
b) at least one organic corrosion-inhibiting agent that is a compound comprising at least one thiol function and/or at least one thione function selected from 2-mercaptobenzothiazole or 2-MBT, also called benzothiazole-2-thiol or 2(3H)-benzothazolethione, 6-methyl-2-mercaptobenzothiazole, naphthol[1,2-d]thiazole-2(1H)-thione, 7-methyl-benzothiazole-2-thiol, 4-methyl-2(3H)-benzothiazolethione, 6-ethyl-2-benzothiazolinethione, 2,5-dimercapto-1,3,4-thiadiazole or DMTD, mercaptobenzimidazole, and the salts thereof, such as for example the metals or amine salts thereof; preferably the organic corrosion-inhibiting agent is selected from the sodium salt (1/1) of benzothiazolethione, the zinc salt (2:1) of benzothiazolethione, and the cyclohexylamine salt of 2-mercaptobenzothiazole;
c) optionally a solvent; and
d) at least one solid inorganic corrosion-inhibiting agent selected from the metal oxides such as zinc, cerium (IV), titanium, iron zirconium, praseodymium (III) and antimony oxides; metalloid oxides; zinc calcium strontium aluminium orthophosphosilicate hydrate; synthetic amorphous silica exchanged by calcium ions; strontium aluminium polyphosphate hydrate; barium sulfate; zinc 5-nitroisophthalate; calcium strontium phosphosilicate rendered organophilic; zinc phosphate in particular rendered organophilic; zinc molybdate in particular rendered organophilic; modified aluminium polyphosphate; strontium titanate; antimony tin oxide (ATO); and molybdenum; said solid inorganic corrosion-inhibiting agent having a nanometric particle size, on the understanding that nanometric particle size means that the mean size, for example the mean diameter (d₅₀), of the nanometric particles is from 1 to 100 nm, preferably from 5 to 50 nm, more preferably from 10 to 50 nm, better from 10 to 20 nm, the size of the particles being measured by TEM (transmission electron microscopy).

2. Composition according to claim 1, comprising, as % by weight with respect to the total weight of the composition:
- from 30% to 60% by weight organic binding resin;
- from 5% to 20% by weight organic corrosion-inhibiting agent that is at least a compound comprising at least one thiol function and/or at least one thione function;
- from 5% to 20% by weight solid inorganic corrosion-inhibiting agent;
- from 0% to 50%, preferably from 10% to 40%, by weight solvent.

3. Composition according to any one of the preceding claims, which furthermore comprises at least one accelerator, such as a thiocarbamate such as 1-pyrrolidine-dithiocarbamate or PYRR; preferably, the composition comprises from 2 to 20%, preferably from 5 to 10% by weight accelerator with respect to the total weight of the composition.

4. Composition according to any one of the preceding claims, wherein the inorganic corrosion-inhibitor is selected from the corrosion inhibitors in the form of pigments.

5. Composition according to any one of the preceding claims, wherein the solvent is selected from water, organic solvents and mixtures thereof; preferably the solvent comprises a majority by weight of water; more preferably the solvent consists of water.

6. Composition according to any one of the preceding claims, which furthermore comprises at least one dispersing agent, preferably in an amount of 0.5% to 3% by weight of the total weight of the composition; and/or at least one anti-foaming agent, preferably in an amount of 0.1% to 1% by weight of the total weight of the composition; and/or at least one fungicidal agent, preferably in an amount of 0.01% to 0.5% by weight of the total weight of the composition; and/or at least one bactericidal agent, preferably in an amount of 0.01% to 0.5% by weight of the total weight of the composition; and/or at least one dye and/or at least one pigment, preferably in an amount of 0.1% to 1% by weight of the total weight of the composition for each dye or pigment; and/or at least one wetting agent, preferably in an amount of 0.1% to 5% by weight of the total weight of the composition; and/or at least one rheological agent, preferably in an amount of 0.01% to 5% by weight, more preferably in an amount of 0.01% to 0.5% by weight, of the total weight of the composition; and/or one or more additive(s), selected for example from anti-skinning agents, siccatives, waxes, preferably each in an amount of 0.1% to 1% by weight of the total weight of the composition; and/or at least one filler, preferably in an amount of 5% to 20% by weight of the total weight of the composition.

7. Method for preparing an anti-corrosion layer on a surface of a substrate, wherein:
- the composition according to any one of claims 1 to 6 is deposited, on the surface of the substrate, to give a layer of the composition on the surface of the substrate; preferably the composition is deposited by a technique selected from spraying, for example by means of a gun, sprinkling, dipping, brushing, or deposition by aerosol,
- said layer of the composition is dried, by means of which the anti-corrosion layer is obtained on the surface of the substrate; preferably, the anti-corrosion layer has a thickness in the dry state of 5 to 45 µm, more preferably from 10 to 25 µm, better from 20 to 25 µm.

8. Method according to claim 7, wherein, in a single operation, a layer of the composition is deposited with a wet thickness of 10 to 100 µm, preferably from 40 to 50 µm.

9. Method according to any one of claims 7 to 8, wherein the substrate is made of a material selected from metals; metal alloys; organic or mineral glasses; organic polymers such as thermoplastic polymers; wood; ceramics; textiles; concretes; papers; stone; carbon fibres; and the composite materials comprising several of the materials previously listed such that the composite materials comprising carbon fibres such as plastics materials with carbon fibres reinforcements; this material optionally being plated and/or having undergone a surface treatment and/or being coated, for example painted; preferably, the substrate is made of a material selected from aluminium; titanium; copper; iron; magnesium; and alloys thereof, such as steels, for example stainless steels, aluminium alloys, such as the 2024-T3 aluminium alloy, and Inconel; the surface of the substrate optionally being plated and/or having undergone a surface treatment and/or being coated, for example painted.

10. Method according to any one of claims 7 to 9, wherein, prior to the deposition of the composition, the surface is cleaned and/or activated and/or pickled by a chemical and/or physical and/or mechanical treatment.

11. Method according to any one of claims 7 to 10, wherein the layer of composition is dried at ambient temperature, and in open air, for a period of 15 minutes to 7 days, preferably for a period of 15 to 60 minutes.

12. Method according to any one of claims 7 to 11, wherein said surface is coated solely with said anti-corrosion layer, preferably containing a dye and/or a pigment, thus forming a single-layer coating on said surface, preferably the substrate is made of a metal or of a metal alloy and said single-layer coating is a coating called "Direct to Metal" or "DTM".

13. Anti-corrosion layer prepared by the method according to any one of claims 7 to 12.

14. Substrate comprising at least one surface coated with at least one anti-corrosion layer according to claim 13; preferably at least one surface of the substrate is coated solely with said anti-corrosion layer, preferably containing a dye and/or a pigment, thus forming a single-layer coating on said surface, preferably the substrate is made of a metal or of a metal alloy and said single-layer coating is a coating called "Direct to Metal" or "DTM".

15. Substrate according to claim 14 that consists of a part or the whole of an aircraft such as an aeroplane, a seaplane, a helicopter, or a drone; a space vehicle; a rocket; a ship; a hovercraft; an offshore platform; a motor vehicle such as a car, a motorcycle or a lorry; a gas pipeline, an oil pipeline, or an aqueduct; a rail vehicle such as a locomotive or a wagon; a wind turbine; a marine turbine.

16. Use of the anti-corrosion layer according to claim 13, for imparting corrosion-resistance properties to a surface of a substrate, in particular to a surface made of a material selected from metals such as aluminium, metal alloys such as aluminium alloys, and composite materials comprising a metal or a metal alloy; preferably the substrate is made of aluminium or of an aluminium alloy, and the anti-corrosion layer imparts to the surface a resistance to corrosion in the salt-spray corrosion resistance test, in accordance with NF EN ISO 9227:2012, of more than 1000 hours, preferably of more than 2000 hours, and more preferably of more than 3000 hours for a layer with a thickness of 25 µm in the dry state.

17. Use according to claim 16, wherein said surface is coated only by said anti-corrosion layer.
